(19) Europäisches Patentamt
European Patent Office
Office européen des brevets

(11) **EP 2 738 297 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(51) Int Cl.:
***D04H 3/16*** *(2006.01)*  ***D01D 5/088*** *(2006.01)*
***D01D 5/098*** *(2006.01)*  ***D04H 3/007*** *(2012.01)*

(21) Anmeldenummer: **12195239.4**

(22) Anmeldetag: **03.12.2012**

(54) **Vorrichtung und Verfahren zur Herstellung einer Spinnvliesbahn aus Filamenten**

Method and device for the manufacture of a spunbonded web made from filaments

Dispositif et procédé destinés à la fabrication d'une bande de non-tissé en filaments

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.06.2014 Patentblatt 2014/23**

(73) Patentinhaber: **Reifenhäuser GmbH & Co. KG Maschinenfabrik**
**53844 Troisdorf (DE)**

(72) Erfinder:
• **Cinquemani, Claudio**
**50733 Koeln (DE)**

• **Frey, Detlef**
**53859 Niederkassel (DE)**
• **Geus, Hans-Georg**
**53859 Niederkassel (DE)**
• **Schlag, Peter**
**53844 Troisdorf (DE)**

(74) Vertreter: **Rohmann, Michael**
**Andrejewski - Honke**
**Patent- und Rechtsanwälte**
**An der Reichsbank 8**
**45127 Essen (DE)**

(56) Entgegenhaltungen:
**EP-A1- 1 340 843    EP-A1- 1 396 568**
**EP-A1- 1 630 265    US-A1- 2010 099 321**

**Beschreibung**

Die Erfindung betrifft eine Vorrichtung zur Herstellung einer Spinnvliesbahn aus Filamenten mit Spinnerette, Kühlkammer, Verstreckeinheit und einer Ablagevorrichtung für die Ablage der Filamente zur Spinnvliesbahn. Die Erfindung betrifft fernerhin ein Verfahren zur Herstellung einer Spinnvliesbahn aus Filamenten. Es liegt im Rahmen der Erfindung, dass mit der erfindungsgemäßen Vorrichtung bzw. mit dem erfindungsgemäßen Verfahren eine Spinnvliesbahn nach dem sogenannten spun-bond-Verfahren hergestellt wird. Die Filamente bestehen vorzugsweise aus einem thermoplastischen Kunststoff, bevorzugt aus Polypropylen und besonders bevorzugt aus einem speziell modifizierten Polypropylen. Filamente meint im Übrigen Endlosfasern bzw. Endlosfilamente, die sich deutlich von den wesentlich kürzeren Stapelfasern unterscheiden.

Vorrichtungen und Verfahren der vorstehend genannten Art sind aus der Praxis bzw. aus dem Stand der Technik in verschiedenen Ausführungsformen bekannt. Verwiesen werden kann beispielsweise auf EP 1 340 843 A1. Bei vielen bekannten Vorrichtungen bzw. Verfahren lässt die Festigkeit der hergestellten Spinnvliesbahn zu wünschen übrig und vor allem die Querfestigkeit der Spinnvliesbahn quer zur Maschinenrichtung bzw. quer zur Transportrichtung. Ein weiteres Problem sind Durchmesserinhomogenitäten an den abgelegten Filamenten. Dabei handelt es sich um kleine Kunststoffaggregate, die die Homogenität der Spinnvliesbahn negativ beeinträchtigen. Fernerhin ist es im Rahmen der bekannten Maßnahmen häufig schwierig Filamente mit hoher Feinheit bzw. mit geringem Titer herzustellen.

Demgegenüber liegt der Erfindung das technische Problem zugrunde, eine Vorrichtung der eingangs genannten Art anzugeben, mit der die vorstehend beschriebenen Nachteile effektiv und funktionssicher vermieden werden können. Der Erfindung liegt weiterhin das technische Problem zugrunde, ein entsprechendes Verfahren zur Herstellung einer Spinnvliesbahn anzugeben.

Zur Lösung des technischen Problems lehrt die Erfindung eine Vorrichtung zur kontinuierlichen Herstellung einer Spinnvliesbahn aus Filamenten, mit Spinnerette, einer Kühlkammer, in die Prozessluft zur Kühlung der Filamente einführbar ist, einer zwischen Spinnerette und Kühlkammer angeordneten Monomerabsaugungsvorrichtung, einer Verstreckeinheit und einer Ablagevorrichtung für die Ablage der Filamente zur Spinnvliesbahn, wobei die Kühlkammer in zwei Kühlkammerabschnitte unterteilt ist, wobei Prozessluft aus einem ersten oberen Kühlkammerabschnitt mit einem Volumenstrom $V_M$ zur Monomerabsaugungsvorrichtung saugbar ist, wobei Prozessluft aus dem ersten oberen Kühlkammerabschnitt mit einem Volumenstrom $V_1$ in einen zweiten unteren Kühlkammerabschnitt austritt und wobei das Volumenstromverhältnis $V_M/V_1$ 0,1 bis 0,35, vorzugsweise 0,12 bis 0,25 beträgt. Besonders bevorzugt beträgt das Volumenstromverhältnis $V_M/V_1$ 0,15 bis 0,2. Der Volumenstrom wird zweckmäßigerweise in $m^3/s$ gemessen. Der Ausdruck Prozessluft bezeichnet im Übrigen insbesondere Kühlluft zur Kühlung der Filamente. Vorzugsweise werden die Filamente mit Hilfe der Verstreckeinheit aerodynamisch verstreckt.

Es liegt im Rahmen der Erfindung, dass Filamente aus einem thermoplastischen Kunststoff hergestellt werden. Empfohlenermaßen handelt es sich bei dem thermoplastischen Kunststoff um ein Polypropylen bzw. um ein speziell modifiziertes - weiter unten noch erläutertes - Polypropylen. Eine ganz besonders bevorzugte Ausführungsform der Erfindung ist dadurch gekennzeichnet, dass die Filamente als Monokomponentenfilamente erzeugt werden.

Grundsätzlich könnten mit der erfindungsgemäßen Vorrichtung aber auch Bikomponentenfilamente bzw. Multikomponentenfilamente hergestellt werden.

Zweckmäßigerweise ist die Kühlkammer mit Abstand zu der Spinnerette bzw. zu der Düsenplatte der Spinnerette angeordnet. Wie weiter unten noch dargelegt ist der Abstand zwischen der Spinnerette bzw. der Düsenplatte und der Kühlkammer nach besonders bevorzugter Ausführungsform der Erfindung einstellbar. Zwischen der Spinnerette und der Kühlkammer ist erfindungsgemäß eine Monomerabsaugungsvorrichtung angeordnet. Die Monomerabsaugungsvorrichtung saugt Luft aus dem Filamentbildungsraum direkt unterhalb der Spinnerette bzw. der Düsenplatte ab, wodurch erreicht wird, dass die neben den Polymerfilamenten austretenden Gase wie Monomere, Oligomere, Zersetzungsprodukte und dergleichen aus der Anlage entfernt werden können. Die Monomerabsaugungsvorrichtung weist zweckmäßigerweise eine Absaugungskammer auf, an die bevorzugt zumindest ein Absaugungsgebläse angeschlossen ist. Empfohlenermaßen weist die Absaugungskammer zum Filamentbildungsraum hin zumindest einen Absaugungsschlitz auf. Durch diesen zumindest einen Absaugungsschlitz werden die oben genannten Gase bzw. wird Luft aus dem Filamentbildungsraum abgesaugt. Der Erfindung liegt die Erkenntnis zugrunde, dass mit der Monomerabsaugungseinrichtung auch Prozessluft aus dem ersten oberen Kühlkammerabschnitt abgesaugt wird und zwar mit einem Volumenstrom $V_M$. Der Erfindung liegt weiterhin die Erkenntnis zugrunde, dass eine Spinnvliesbahn mit besonders vorteilhaften Eigenschaften erzeugt werden kann, wenn das Volumenstromverhältnis $V_M/V_1$ wie beansprucht bzw. wie beschrieben eingestellt wird. Die erreichten Vorteile sind besonders ausgeprägt, wenn nach sehr empfohlener Ausführungsform der Erfindung das weiter unten noch erläuterte spezielle Polypropylen zur Erzeugung der Filamente bzw. zur Herstellung der Spinnvliesbahn eingesetzt wird.

Es liegt im Rahmen der Erfindung, dass neben der Kühlkammer eine Luftzufuhrkabine angeordnet ist, die in zumindest zwei Kabinenabschnitte unterteilt ist, wobei aus einem ersten oberen Kabinenabschnitt Prozessluft in den ersten oberen Kühlkammerabschnitt einführbar ist und wobei aus einem zweiten unteren Kabinenabschnitt Prozessluft in den zweiten unteren Kühlkammerabschnitt einführbar ist. Es liegt dabei weiterhin im Rahmen der Erfindung, dass Prozessluft in den ersten oberen Kühlkammerabschnitt einerseits und Prozessluft in den zweiten unteren Kühlkammerabschnitt andererseits mit unterschiedlichen Volumenströmen eingeführt wird. Zweckmäßigerweise sind zumindest zwei vertikal übereinander angeordnete Kühlkammerabschnitte unterhalb der Spinnerette vorgesehen, in denen die Filamente mit Prozessluft beaufschlagt werden. Bevorzugt sind lediglich zwei Kühlkammerabschnitte vertikal übereinander angeordnet. Nach dem Austreten aus den Spinndüsenöffnungen der Spinnerette werden die Filamente zunächst an der Monomerabsaugungsvorrichtung vorbeigeführt und durchlaufen dann zuerst den ersten oberen Kühlkammerabschnitt und danach den zweiten unteren Kühlkammerabschnitt.

Eine empfohlene Ausführungsform der Erfindung ist dadurch gekennzeichnet, dass Prozessluft mit einem Volumenstrom $V_2$ aus dem zweiten unteren Kühlkammerabschnitt austritt und dass das Volumenstromverhältnis des aus dem ersten oberen Kühlkammerabschnitt austretenden Volumenstroms $V_1$ zu dem aus dem zweiten unteren Kühlkammerabschnitt austretenden Volumenstrom $V_2$ ($V_1/V_2$) 0 bis 0,5, vorzugsweise 0,05 bis 0,5 und besonders bevorzugt 0,1 bis 0,45 beträgt. Es liegt im Rahmen der Erfindung, dass die aus dem zweiten unteren Kühlkammerabschnitt austretenden Filamente bzw. die aus dem zweiten unteren Kühlkammerabschnitt austretende Prozessluft in die Verstreckeinheit eingeführt werden. - Eine bevorzugte Ausführungsform der Erfindung ist dadurch gekennzeichnet, dass Prozessluft aus dem ersten oberen Kühlkammerabschnitt mit einer Geschwindigkeit $v_1$ in den zweiten unteren Kühlkammerabschnitt austritt, dass Prozessluft aus dem zweiten unteren Kühlkammerabschnitt mit einer Geschwindigkeit $v_2$ austritt und dass das Geschwindigkeitsverhältnis $v_1/v_2$ 0,2 bis 0,5, vorzugsweise 0,25 bis 0,5 und bevorzugt 0,3 bis 0,5 beträgt. Nach bewährter Ausführungsvariante beträgt das Geschwindigkeitsverhältnis $v_1/v_2$ 0,35 bis 0,45 und insbesondere beispielsweise 0,4.

Es liegt im Rahmen der Erfindung, dass zwischen der Kühlkammer und der Verstreckeinheit ein Zwischenkanal angeordnet ist, welcher Zwischenkanal vom Austritt der Kühlkammer zum Eintritt in einen Unterziehkanal der Verstreckeinheit im Vertikalschnitt keilförmig zusammenläuft. Zweckmäßigerweise läuft der Zwischenkanal zum Eintritt des Unterziehkanals im Vertikalschnitt auf die Eintrittsbreite des Unterziehkanals keilförmig zusammen.

Gemäß sehr bewährter Ausführungsform der Erfindung ist im Bereich der Kühlkammer und im Übergangsbereich zwischen Kühlkammer und Verstreckeinheit keine Luftzufuhr von Außen vorgesehen, abgesehen von der Zufuhr der Prozessluft in der Kühlkammer. Insoweit wird im Rahmen der Erfindung mit einem sogenannten geschlossenen System gearbeitet. Vorzugsweise ist im Bereich der Kühlkammer, im Bereich des Zwischenkanals und im Bereich der Verstreckeinheit keine Luftzufuhr von Außen vorgesehen, abgesehen von der Zufuhr der Prozessluft in der Kühlkammer.

Es empfiehlt sich, dass zwischen der Verstreckeinheit und der Ablagevorrichtung zumindest ein Diffusor angeordnet ist. Ein solcher Diffusor weist zweckmäßigerweise einen zur Ablagevorrichtung hin orientierten divergierenden Abschnitt auf bzw. einen Abschnitt mit divergierenden Seitenwänden. Dadurch wird eine funktionssichere Ablage der Filamente zum Wirrvlies erleichtert. - Vorzugsweise handelt es sich bei der Ablagevorrichtung im Übrigen um ein endlos umlaufendes Ablagesiebband. Die Filamente werden auf diesem Ablagesiebband zur Spinnvliesbahn abgelegt und diese Bahn wird nachfolgend zweckmäßigerweise kompaktiert und/oder verfestigt. Die Verfestigung kann insbesondere in einem Kalander erfolgen.

Eine besonders bevorzugte Ausführungsform der Erfindung ist dadurch gekennzeichnet, dass die Düsenbohrungen der Spinnerette überall bzw. über die gesamte Düsenplatte homogen verteilt angeordnet sind. Es liegt dabei im Rahmen der Erfindung, dass die Abstände der Düsenbohrungen in der Mitte der Spinnerette die gleichen sind wie in den Außenbereichen der Spinnerette. Es empfiehlt sich, dass alle auf einer Geraden bzw. auf einer gedachten Geraden angeordneten Düsenbohrungen gleiche Abstände voneinander aufweisen. Eine solche symmetrische Verteilung der Düsenbohrungen hat sich für die Lösung des technischen Problems der Erfindung besonders bewährt. - Wie oben bereits dargelegt ist nach empfohlener Ausführungsform der Erfindung der Abstand der Spinnerette bzw. der Abstand der Düsenplatte zur Kühlkammer einstellbar bzw. variierbar. Dazu ist die vertikale Höhe der Spinnerette zweckmäßigerweise einstellbar.

Zur Lösung des technischen Problems lehrt die Erfindung weiterhin ein Verfahren zur kontinuierlichen Herstellung einer Spinnvliesbahn aus Filamenten aus thermoplastischem Kunststoff, wobei die Filamente mittels einer Spinnerette ersponnen werden und an einer Monomerabsaugungsvorrichtung vorbei in eine Kühlkammer eingeführt werden, wobei die Filamente in der Kühlkammer mit Prozessluft gekühlt werden, wobei die Kühlkammer in zwei Kühlkammerabschnitte unterteilt ist, wobei Prozessluft aus einem ersten oberen Kühlkammerabschnitt mit einem Volumenstrom $V_M$ zur Monomerabsaugungsvorrichtung gesaugt wird, wobei Prozessluft aus dem ersten oberen Kühlkammerabschnitt mit einem Volumenstrom $V_1$ in einen zweiten unteren Kühlkammerabschnitt eingeführt wird, wobei das Volumenstromverhältnis $V_M/V_1$ 0,1 bis 0,3, vorzugsweise 0,12 bis 0,25 beträgt, wobei die Filamente nach dem Austritt aus der Kühlkammer in eine Verstreckeinheit eingeführt werden und wobei die Filamente danach auf einer Ablagevorrichtung zur Spinnvliesbahn abgelegt werden.

Wie oben bereits dargelegt wird als thermoplastischer Kunststoff vorzugsweise ein Polypropylen eingesetzt. Die erfindungsgemäß erzeugten Filamente bestehen also aus Polypropylen bzw. im Wesentlichen aus Polypropylen. Zweckmäßigerweise ist das Polypropylen ein Homopolymer oder ein Copolymer. Bevorzugt weist das Polypropylen eine Schmelzflussrate (MFR) von beispielsweise 10 dg/min bis 40 dg/min, bevorzugt von 10 dg/min bis 25 dg/min und besonders bevorzugt von 10 dg/min bis 21,5 dg/min auf. Es liegt im Rahmen der Erfindung, dass die Schmelzflussrate gemäß der Norm ASTM D1238 (2,16 kg, 230 °C) gemessen wird. Die MFR wird in Gramm (g) des Polymers pro 10 Minuten (min) oder dem Äquivalent in Dezigramm (dg) des Polymers pro Minute (min) angegeben.

Es empfiehlt sich, dass ein Quotient $R_2$ aus dem dimensionslosen Spannungsverhältnis (Stress Ratio, SR) zu der Verlusttangente (Loss Tangent, tan $\delta$) vorzugsweise zwischen 0,6 und 30, bevorzugt zwischen 1,5 und 30 und besonders bevorzugt zwischen 1,5 und 28 liegt. $R_2$ ist vorzugsweise der Quotient aus dem Term (SR (500 s$^{-1}$) $\eta_o$) · 1 / 248 und dem Term (tan $\delta$ · (0,1 rad/s)).

Zweckmäßigerweise wird der Wert $R_2$ mittels Untersuchung der oszillatorischen Scherung mit kleinen Winkeln (SAOS) bei 190 °C durchgeführt, wobei ein 25 mm Kegel mit einem Winkel von einem Grad auf einer Plattenkonfiguration eines Rheometers (z. B. MCR 301 der Anton Paar GmbH) verwendet wird. Die Testscheiben weisen im Rahmen der Erfindung einen Durchmesser von 25 mm und eine Dicke von 1 mm auf und sind vorzugsweise erhaltbar, indem eine Pellet-Probe bei 190 °C eine Minute druckfrei und danach 1,5 Minuten unter einem Druck von vorzugsweise 50 bar gepresst werden und danach 5 Minuten zwischen wassergekühlten Platten gekühlt werden. Durch Aufbewahren bei 190 °C für 13 Minuten werden thermische und/oder kristalline Informationen in der Probe gelöscht. Vorzugsweise wird ein Winkelgeschwindigkeitsbereich bzw. ein Winkelfrequenzbereich von 500 rad/s bis 0,0232 rad/s mit 6 Messpunkten pro 10 rad und einem Spannungswert von 10% durchlaufen, welcher Spannungswert der in der linearen Viskoelastizitätsregion liegt, welche Viskoelastizitätsregion durch einen Spannungstest ermittelbar ist. Alle Versuche werden im Rahmen der Erfindung in einer Stickstoffatmosphäre zur Vermeidung des Zersetzens der Probe bei der Messung durchgeführt.

Es liegt im Rahmen der Erfindung, dass eine Null-Scherrate ($\eta_o$) durch einen frequenzabhängigen Speicheranteil (G'), einen frequenzabhängigen Verlustanteil (G") und eine diskrete Relaxationsspektrumsmethode, welche Methode auf einer linearen Regression basiert, definiert ist:

$$\eta_0 = \sum_{j=1}^{M} \lambda_j G_j$$

wobei M die Nummer der diskreten Relaxationswerte ist, die von dem Wertebereich der experimentellen Winkelgeschwindigkeiten bzw. Winkelfrequenzen abhängt. $\lambda_j$ ist die diskrete Relaxationszeit des diskreten Spektrums und $G_j$ ist der korrespondierende Schermodul.

Im Fall von Zusammensetzungen, bei denen die terminale Zone (d. h., G' ist proportional zum Quadrat der Winkelgeschwindigkeit $\omega^2$ und G" ist proportional zur Winkelgeschwindigkeit) noch nicht im Frequenzbereich des Experiments erreicht ist, so dass die komplexe Viskosität $|\eta^*|$ noch keinen Plateauwert erreicht, sollte $\eta_o$ mittels eines Schmelzkriechexperiments ermittelt werden. Aus einem Quotienten des Verlustanteils G" und dem Speicheranteil G' lässt sich die Verlusttangente (Loss Tangent, tan $\delta$) nach der folgenden Formel berechnen:

$$\tan\delta = \frac{G''}{G'}$$

Die Verlusttangente ist ein Maß der Schmelzelastizität und betrifft die molekularen Eigenschaften der Zusammensetzung (z. B. die Kettenlängenverteilung, die Dichte der molekularen Verschlaufung, etc.). Im Rahmen der Erfindung ist die erste Normalspannungsdifferenz ($N_1$) bei einer beständigen Scherung mit einer konstanten Scherrate $\dot{\gamma}$ eine Funktion der dynamischen Module G' und G" gemäß der Formel:

$$N_1\left(\dot{\gamma}\right) = 2G'\left[1 + \left(\frac{G'}{G''}\right)^2\right]^{0,7} \textit{für } \omega = \dot{\gamma}$$

G' und G" beziehen sich beide auf die Winkelfrequenz $\omega$, wobei die Temperatur für die kleinwinkeloszillatorische Scherungen (SAOS) und die Versuche bei beständiger bzw. konstanter Scherung gleich ist. Die Gleichgewichtsscherspannung ($T_{xy}$) wird von der komplexen Viskosität $|\eta^*|$ nach der folgenden Formel ermittelt:

$$\tau_{xy}\left(\overset{\bullet}{\gamma}\right) = \omega\left|\eta*(\omega)\right| \qquad f\ddot{u}r\,\omega = \overset{\bullet}{\gamma}$$

Die normierte komplexe Viskosität ist nach den nachfolgenden Gleichungen durch den Speicheranteil und den Verlustanteil als Funktion der Frequenz ω gegeben:

$$\left|\eta*(\omega)\right| = \frac{\left(G'^2 + G''^2\right)^{\frac{1}{2}}}{\omega}$$

Das Spannungsverhältnis (SR) ist definiert als:

$$SR\left(\overset{\bullet}{\gamma}\right) = \frac{N_1\left(\overset{\bullet}{\gamma}\right)}{\tau_{xy}\left(\overset{\bullet}{\gamma}\right)}$$

Der dimensionslose Index $R_2$ ergibt sich aus einem Quotienten mit dem Spannungsverhältnis und der Verlusttangente gemäß der nachfolgenden Formel:

$$R_2 = \frac{SR\left(500s^{-1}\right)\eta_{\bullet}}{\tan S\left(0,1rad/s\right)} \bullet \frac{1}{248}$$

wobei $\eta_o$ die Einheit Pascalsekunden (Pa·s) aufweist.

Es empfiehlt sich, dass das Polypropylen eine Onset-Temperatur ($T_{c,rheol}$) vorzugsweise im Fluss von zumindest 120 °C, bevorzugt von zumindest 123 °C und besonders bevorzugt von zumindest 131 °C aufweist. Die Onset-Temperatur wird vorzugsweise mittels Kristallisation durch SAOS (Small Angel Oscillatory Shear) Rheologie bestimmt. Zweckmäßigerweise wird die Probe aus dem geschmolzenen Zustand bei vorzugsweise 190 °C mit einer vorgegebenen Kühlrate abgekühlt. Die Probe wird im Rahmen der Erfindung in Form von Testscheiben mit einem Durchmesser von 25 mm und einer Dicke von 2,5 mm druckfrei aufgeschmolzen und dann 3 Minuten unter Druck geformt. Die ursprünglich 2,5 mm dicken Testscheiben werden anschließend in einen zwischen zwei parallelen Platten ausgebildeten, 1,9 mm breiten Spalt eingeführt. Vorzugsweise werden bei der Durchführung der Messung thermische Ausdehnungen des Werkzeugs berücksichtigt, so dass ein konstanter Spaltabstand über das ganze Experiment hinweg sichergestellt ist. Zweckmäßigerweise werden die Testscheiben zunächst auf eine Temperatur von 190 °C erwärmt und für 15 Minuten bei 190 °C temperiert, um thermische und kristalline Struktureigenarten zu eliminieren. Die Testscheibe wird dann im Rahmen der Erfindung ausgehend von der Starttemperatur von 190 °C mit einer konstanten Kühlrate von vorzugsweise 1 °C/min und einer Winkelgeschwindigkeit von einem rad/s mit einer Dehnung von 1 % belastet, welche Dehnung innerhalb des Bereichs der linearen Viskoelastizität liegt. Zur Beendigung des Experiments wird ein maximales Drehmomentkriterium verwendet. Beim Beginn der Kristallisation während des Rheologietestes geht das Messinstrument in einen Überlastungszustand über, wenn das maximale Drehmoment erreicht ist, so dass der Test automatisch abgebrochen wird. Die Kristallisation wird beobachtet durch einen plötzlichen Anstieg der komplexen Viskosität und einen plötzlichen Abfall der Verlusttangente, d. h., der Auftrag der komplexen Viskosität gegen die Temperatur und der Verlusttangente gegen die Temperatur weist eine Region mit einem plötzlichen Wechsel der rheologischen Eigenschaften auf, welche rheologische Eigenschaften durch das Auftreten der Kristallisation hervorgerufen werden. Die Onset-Temperatur bzw. Onset-Kristallisationstemperatur ($T_{c,rheol}$) ist definiert als die Temperatur, bei der ein steiler Anstieg der komplexen Viskosität und ein simultanes Abfallen der Verlusttangente feststellbar ist.

Zweckmäßigerweise weist das Polypropylen eine durchschnittliche, isotaktische Sequenzlänge von zumindest 65, vorzugsweise zumindest 85 und bevorzugt zumindest 97 auf. Die durchschnittliche isotaktische Sequenzlänge (Average Meso Run Length, MRL) wird durch die Formel MRL = 10.000 : $D_{total}$ angegeben. Dabei ist $D_{total}$ die Summe der Anzahl der Stereodefekte ($D_s$) pro 10.000 Monomereinheiten des Polymers und der Anzahl der Regiodefekte ($D_r$)

pro 10.000 Monomere des Polymers. Zweckmäßigerweise wird eine Taktizität des Polypropylens zur Bestimmung der durchschnittlichen, isotaktischen Sequenzlänge mittels $^{13}$C MNR, beispielsweise in 1,1,2,2, Tetrachlorethan-D2 bei einer Temperatur von 140 °C bestimmt.

Es liegt im Rahmen der Erfindung, dass die Filamente als Monokomponentenfilamente erzeugt werden. Monokomponentenfilamente haben sich im Hinblick auf die Lösung des erfindungsgemäßen technischen Problems ganz besonders bewährt. - Es liegt weiterhin im Rahmen der Erfindung, dass die Verstreckung der Filamente mit der Maßgabe durchgeführt wird, dass Filamente mit einem Filamentdurchmesser von 0,3 bis 2 den, bevorzugt von 0,3 bis 0,9 den erhalten werden. Zweckmäßigerweise liegt der Filamentdurchmesser der erfindungsgemäß erzeugten Filamente kleiner als 1 den und besonders bevorzugt deutlich kleiner als 1 den. Der Filamentdurchmesser wird dabei an den zur Spinnvliesbahn abgelegten Filamenten gemessen.

Der Erfindung liegt die Erkenntnis zugrunde, dass mit der erfindungsgemäßen Vorrichtung und mit dem erfindungsgemäßen Verfahren Spinnvliese mit optimaler Homogenität erzeugt werden können. Störende Inhomogenitäten wie Durchmesserinhomogenitäten an den Filamenten oder dergleichen können mit den erfindungsgemäßen Maßnahmen vermieden werden. Hervorzuheben ist weiterhin, dass mit der erfindungsgemäßen Vorrichtung bzw. mit dem erfindungsgemäßen Verfahren Spinnvliesbahnen mit ausgezeichneter Festigkeit und insbesondere mit hervorragender Festigkeit in Querrichtung bzw. quer zur Transportrichtung hergestellt werden können. Außerdem können im Rahmen der erfindungsgemäßen Maßnahmen bei Einstellung entsprechender Verstreckbedingungen Filamente mit überraschend geringen Titern erzeugt werden. Insgesamt zeichnet sich die erfindungsgemäße Vorrichtung bzw. zeichnet sich das erfindungsgemäße Verfahren durch geringe Kosten und geringen Aufwand aus. Die vorstehend erläuterten Vorteile sind überraschenderweise besonders ausgeprägt, wenn das spezielle modifizierte Polypropylen für die Herstellung der Spinnvliese eingesetzt wird.

Nachfolgend wird die Erfindung anhand einer lediglich ein Ausführungsbeispiel darstellenden Zeichnung näher erläutert. Es zeigen in schematischer Darstellung:

Fig. 1    Einen Vertikalschnitt durch eine erfindungsgemäße Vorrichtung und

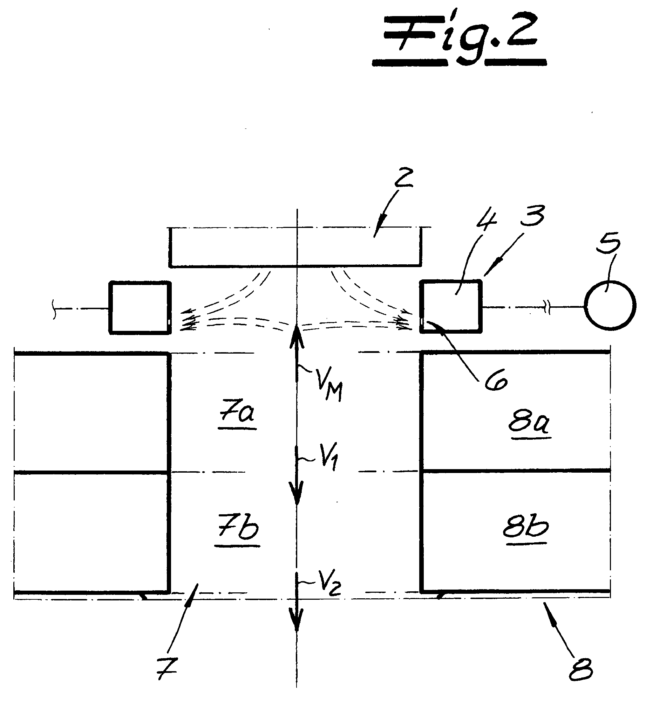

Fig. 2    einen vergrößerten Ausschnitt A aus dem Gegenstand der Fig. 1.

Die Figuren zeigen eine Vorrichtung zur kontinuierlichen Herstellung einer Spinnvliesbahn aus Filamenten aus thermoplastischem Kunststoff. Die Vorrichtung weist zunächst eine Spinnerette 1 mit einer Düsenplatte 2 und darin angeordneten nicht dargestellten Düsenbohrungen für das Erspinnen der Filamente auf. Die ersponnenen Filamente werden anschließend an einer unterhalb der Spinnerette 1 angeordneten Monomerabsaugungsvorrichtung 3 vorbeigeführt. Mit dieser Monomerabsaugungsvorrichtung 3 werden beim Spinnprozess auftretende störende Gase aus der Anlage entfernt. Die Monomerabsaugungsvorrichtung 3 weist eine Absaugungskammer 4 sowie ein an die Absaugungskammer 4 angeschlossenes Absaugungsgebläse 5 auf. Im unteren Bereich der Absaugungskammer 4 ist ein Absaugungsschlitz 6 zum Absaugen der Gase vorgesehen. Zweckmäßigerweise und im Ausführungsbeispiel ist die Absaugungskammer 4 sowohl rechts als auch links von dem Filamentbildungsraum angeordnet. Die linke Hälfte der Absaugungskammer 4 ist ebenfalls an das Absaugungsgebläse 5 angeschlossen.

Unterhalb der Spinnerette 1 und unterhalb der Monomerabsaugungsvorrichtung 3 ist eine Kühlkammer 7 angeordnet, in die Prozessluft zur Kühlung der Filamente einführbar ist. Bevorzugt und im Ausführungsbeispiel ist die Kühlkammer 7 in einen ersten oberen Kühlkammerabschnitt 7a und in einen darunter angeordneten zweiten unteren Kühlkammerabschnitt 7b unterteilt. Zweckmäßigerweise und im Ausführungsbeispiel nach den Figuren ist neben der Kühlkammer 7 eine Luftzufuhrkabine 8 angeordnet die empfohlenermaßen und im Ausführungsbeispiel in einen oberen Kabinenabschnitt 8a und in einen unteren Kabinenabschnitt 8b unterteilt ist. Aus den beiden Kabinenabschnitten 8a, 8b ist bevorzugt und im Ausführungsbeispiel Prozessluft mit unterschiedlichen Volumenströmen zuführbar. Zweckmäßigerweise und im Ausführungsbeispiel ist an die Kabinenabschnitte 8a, 8b jeweils ein Gebläse 9a, 9b zur Zuführung von Prozessluft angeschlossen. Es liegt dabei im Rahmen der Erfindung, dass die zugeführten Volumenströme der Prozessluft regelbar sind. Es liegt ferner in dem Rahmen der Erfindung, dass die Kabinenabschnitte 8a, 8b sowohl rechts als auch links von der Kühlkammer 7 angeordnet sind. Die linken Hälften der Kabinenabschnitte 8a, 8b sind ebenfalls an die entsprechenden Gebläse 9a, 9b angeschlossen.

Der Erfindung liegt die Erkenntnis zugrunde, dass mit der oberhalb der Kühlkammer 7 angeordneten Monomerabsaugungsvorrichtung 3 Prozessluft aus dem ersten oberen Kühlkammerabschnitt 7a absaugbar ist bzw. abgesaugt wird und zwar mit einem Volumenstrom $V_M$. Die Prozessluft verlässt den ersten oberen Kühlkammerabschnitt 7a in Richtung des zweiten Kühlkammerabschnittes 7b mit einem Volumenstrom $V_1$. Erfindungsgemäß beträgt das Volumenstromverhältnis $V_M/V_1$ 0,1 bis 0,3 und bevorzugt 0,12 bis 0,25. Die Prozessluft verlässt den zweiten unteren Kühlkammerabschnitt 7b mit einem Volumenstrom $V_2$. Vorzugsweise beträgt das Volumenstromverhältnis $V_1/V_2$ 0,1 bis 0,5.

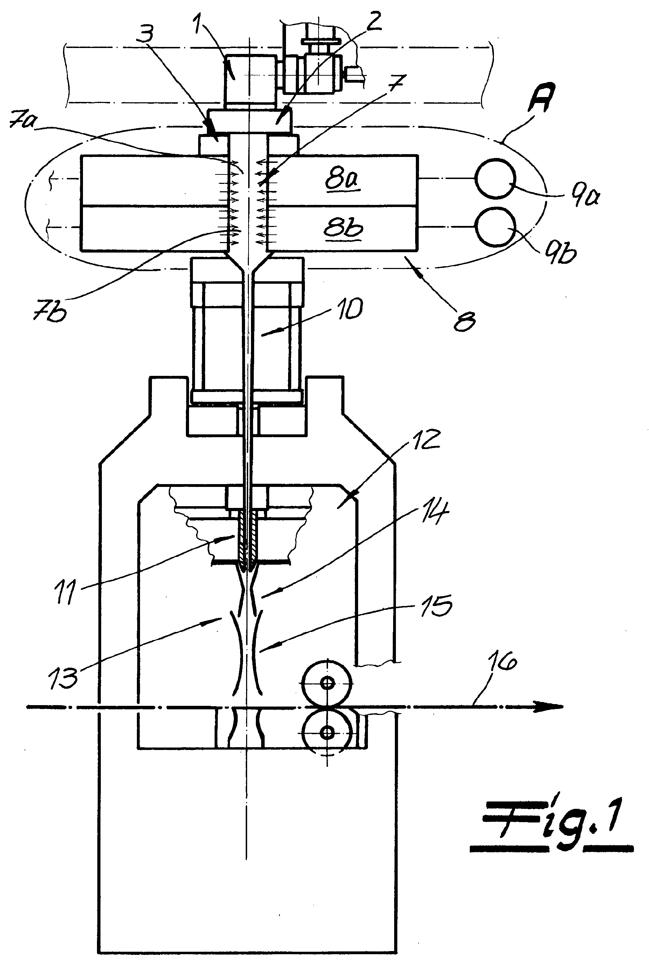

In der Fig. 1 ist erkennbar, dass bevorzugt und im Ausführungsbeispiel an die Kühlkammer 7 ein Zwischenkanal 10 anschließt. Dieser Zwischenkanal 10 erstreckt sich bis zu einem Unterziehkanal 11 der Verstreckeinheit 12. Zweckmäßigerweise und im Ausführungsbeispiel nach Fig. 1 läuft der Zwischenkanal 10 vom Austritt der Kühlkammer 7 zum Eintritt des Unterziehkanals 11 im Vertikalschnitt keilförmig zusammen und zwar bevorzugt und im Ausführungsbeispiel auf die Eintrittsbreite des Unterziehkanals 11. Unterhalb der Verstreckeinheit 12 ist vorzugsweise und im Ausführungsbeispiel eine Verlegeeinheit 13 angeordnet. Im Ausführungsbeispiel weist diese Verlegeeinheit 13 zwei Diffusoren 14, 15 auf. Es ist erkennbar, dass jeder dieser Diffusoren 14, 15 im unteren Bereich divergierend bzw. mit divergierenden Seitenwänden ausgebildet ist. Bevorzugt und im Ausführungsbeispiel ist unterhalb der Verlegeeinheit 13 ein kontinuierlich bewegtes Ablagesiebband 16 für die Ablage der Filamente bzw. der Spinnvliesbahn vorgesehen.

In der Fig. 1 ist erkennbar, dass empfohlenermaßen im Bereich der Kühlkammer 7 sowie des Zwischenkanals 10 und der Verlegereinheit 13 abgesehen von der Zuführung der Prozessluft an der Kühlkammer 7 keine Luftzufuhr stattfindet. Es wird somit mit einem sogenannten geschlossenen System gearbeitet. - In der Fig. 1 ist weiterhin angedeutet worden, dass der Abstand zwischen der Spinnerette 1 bzw. zwischen der Düsenplatte 2 und der Kühlkammer 7 gemäß empfohlener Ausführungsform einstellbar bzw. variierbar ist. Zweckmäßigerweise und im Ausführungsbeispiel ist die vertikale Höhe der Spinnerette 1 einstellbar.

## Patentansprüche

1.    Vorrichtung zur Herstellung einer Spinnvliesbahn aus Filamenten, mit Spinnerette (1), einer Kühlkammer (7), in die Prozessluft zur Kühlung der Filamente einführbar ist, einer zwischen Spinnerette (1) und Kühlkammer (7) angeordneten Monomerabsaugungsvorrichtung (3), einer Verstreckeinheit (12) und einer Ablagevorrichtung zur Ablage der Filamente zur Spinnvliesbahn, wobei die Kühlkammer (7) in zwei Kühlkammerabschnitte (7a, 7b) unterteilt ist, wobei Prozessluft aus einem ersten oberen Kühlkammerabschnitt (7a) mit einem Volumenstrom $V_M$ zur Monomerabsaugungsvorrichtung (3) saugbar ist, wobei Prozessluft aus dem ersten oberen Kühlkammerabschnitt (7a) mit einem Volumenstrom $V_1$ in einen zweiten unteren Kühlkammerabschnitt (7b) austritt und wobei das Volumenstromverhältnis $V_M/V_1$ 0,1 bis 0,35, vorzugsweise 0,12 bis 0,25 beträgt.

2.    Vorrichtung nach Anspruch 1, wobei neben der Kühlkammer (7) eine Luftzufuhrkabine (8) angeordnet ist, die in zumindest zwei Kabinenabschnitte (8a, 8b) unterteilt ist, wobei aus einem ersten Kabinenabschnitt (8a) Prozessluft in den ersten oberen Kühlkammerabschnitt (7a) einführbar ist und wobei aus einem zweiten Kabinenabschnitt (8b) Prozessluft in den zweiten unteren Kühlkammerabschnitt (7b) einführbar ist.

3.    Vorrichtung nach einem der Ansprüche 1 oder 2, wobei Prozessluft mit einem Volumenstrom $V_2$ aus dem zweiten unteren Kühlkammerabschnitt (7b) austritt und wobei das Volumenstromverhältnis $V_1/V_2$ 0 bis 0,5, vorzugsweise 0,05 bis 0,5 und bevorzugt 0,1 bis 0,45 beträgt.

4.    Vorrichtung nach einem der Ansprüche 1 bis 3, wobei Prozessluft aus dem ersten oberen Kühlkammerabschnitt (7b) mit einer Geschwindigkeit $v_1$ in den zweiten unteren Kühlkammerabschnitt (7b) austritt, wobei Prozessluft aus dem zweiten unteren Kühlkammerabschnitt (7b) mit einer Geschwindigkeit $v_2$ austritt und wobei das Geschwindigkeitsverhältnis $v_1/v_2$ 0,2 bis 0,5, vorzugsweise 0,25 bis 0,5 und bevorzugt 0,3 bis 0,5 beträgt.

5.    Vorrichtung nach einem der Ansprüche 1 bis 4, wobei die Verteilung der Düsenbohrungen der Spinnerette (1) überall bzw. über die gesamte Düsenplatte der Spinnerette (1) homogen ist.

6.    Vorrichtung nach einem der Ansprüche 1 bis 5, wobei der Abstand der Spinnerette (1) zur Kühlkammer (7) einstellbar ist.

7.    Vorrichtung nach einem der Ansprüche 1 bis 6, wobei im Bereich der Kühlkammer (7) und im Übergangsbereich zwischen Kühlkammer (7) und Verstreckeinheit (12) keine Luftzufuhr von Außen vorgesehen ist, abgesehen von der Zufuhr der Prozessluft in der Kühlkammer (7).

8.    Vorrichtung nach einem der Ansprüche 1 bis 7, wobei zwischen Verstreckeinheit (12) und Ablagevorrichtung zumindest ein Diffusor (14, 15) angeordnet ist.

9.    Verfahren zur Herstellung einer Spinnvliesbahn aus Filamenten aus thermoplastischem Kunststoff, wobei die Filamente mittels einer Spinnerette (1) ersponnen werden und an einer Monomerabsaugungsvorrichtung (3) vorbei in eine Kühlkammer (7) eingeführt werden, wobei die Filamente in der Kühlkammer (7) mit Prozessluft gekühlt werden, wobei die Kühlkammer (7) in zwei Kühlkammerabschnitte (7a, 7b) unterteilt ist, wobei Prozessluft aus einem ersten oberen Kühlkammerabschnitt (7a) mit einem Volumenstrom $V_M$ zur Monomerabsaugvorrichtung (3) gesaugt wird, wobei Prozessluft aus dem ersten oberen Kühlkammerabschnitt (7b) mit einem Volumenstrom $V_1$ in einen zweiten unteren Kühlkammerabschnitt (7b) eingeführt wird, wobei das Volumenstromverhältnis $V_M/V_1$ 0,1 bis 0,3, vorzugsweise 0,12 bis 0,25 beträgt, wobei die Filamente nach dem Austritt aus der Kühlkammer (7) in eine Verstreckeinheit (12) eingeführt werden und wobei die Filamente danach auf eine Ablagevorrichtung zur Spinnvliesbahn abgelegt werden.

10. Verfahren nach Anspruch 9, wobei als thermoplastischer Kunststoff ein Polypropylen eingesetzt wird.

11. Verfahren nach Anspruch 10, wobei das Polypropylen eine Schmelzflussrate von 10 dg/min bis 40 dg/min aufweist.

12. Verfahren nach Anspruch 10 oder 11, wobei das Polypropylen eine Onset-Temperatur $T_{c,rheol}$ von zumindest 120 °C und vorzugsweise von zumindest 123 °C aufweist.

13. Verfahren nach einem der Ansprüche 10 bis 12, wobei das Polypropylen eine durchschnittliche isotaktische Sequenzlänge von zumindest 65 und vorzugsweise von zumindest 85 aufweist.

14. Verfahren nach einem der Ansprüche 9 bis 13, wobei als Filamente Monokomponentenfilamente erzeugt werden.

15. Verfahren nach einem der Ansprüche 9 bis 14, wobei die Verstreckung der Filamente mit der Maßgabe durchgeführt wird, dass Filamente mit einem Filamentdurchmesser von 0,3 bis 2 den, bevorzugt von 0,3 bis 0,9 den erhalten werden.

## Claims

1. Device for producing a spunbonded nonwoven web from filaments, comprising a spinneret (1), a cooling chamber (7) into which process air for cooling the filaments, can be introduced, a monomer extraction device (3) arranged between the spinneret (1) and the cooling chamber (7), a stretching unit (12), and a depositing device for depositing the filaments for the spunbonded nonwoven web, wherein the cooling chamber (7) is divided into two cooling chamber sections (7a, 7b), wherein process air from a first upper cooling chamber section (7a) can be aspirated to the monomer extraction device (3) with a first volume flow VM, wherein process air from the first upper cooling chamber section (7a) emerges with a volume flow V1 into a second lower cooling chamber section (7b) and wherein the volume flow ratio VM/V1 is 0.1 to 0.35, preferably 0.12 to 0.25.

2. The device according to claim 1, wherein in addition to the cooling chamber (7) an air supply cabin (8) is provided which is divided into at least two cabin sections (8a, 8b), wherein process air can be introduced into the first upper cooling chamber section (7a) from a first cabin section (8a) and wherein process air can be introduced into the second lower cooling chamber section (7b) from a second cabin section (8b).

3. The device according to any one of claims 1 or 2, wherein process air with a volume flow V2 emerges from the second lower cooling chamber section (7b) and wherein the volume flow ratio V1/V2 is 0 to 0.5, preferably 0.05 to 0.5 and preferably 0.1 to 0.45.

4. The device according to any one of claims 1 to 3, wherein process air from the first upper cooling chamber section (7b) emerges at a speed v1 into the second lower cooling chamber section (7b), wherein process air from the second lower cooling chamber section (7b) emerges at a speed v2 and wherein the speed ratio v1/v2 is 0.2 to 0.5, preferably 0.25 to 0.5 and preferably 0.3 to 0.5.

5. The device according to any one of claims 1 to 4, wherein the distribution of the nozzle holes of the spinneret (1) is homogeneous everywhere or over the entire nozzle plate of the spinneret (1).

6. The device according to any one of claims 1 to 5, wherein the distance of the spinneret (1) from the cooling chamber (7) is adjustable.

7. The device according to any one of claims 1 to 6, wherein in the region of the cooling chamber (7) and in the transition region between cooling chamber (7) and stretching unit (12) no air supply from outside is provided apart from the supply of process air into the cooling chamber (7).

8. The device according to any one of claims 1 to 7, wherein at least one diffuser (14, 15) is disposed between stretching unit (12) and depositing device.

9. Method for producing a spunbonded nonwoven web from filaments made of thermoplastic material, wherein the filaments are spun by means of a spinneret (1) and introduced into a cooling chamber (7) past a monomer extraction device (3), wherein the filaments are cooled with the process air in the cooling chamber (7), wherein the cooling chamber (7) is divided into two cooling chamber sections (7a, 7b), wherein process air is aspirated from a first upper cooling chamber section (7a) to the monomer extraction device (3) with a volume flow VM, wherein process air from the first upper cooling chamber section (7b) is introduced into a second lower cooling chamber section (7b) with a volume flow V1, wherein the volume flow ratio VM/V1 is 0.1 to 0.3, preferably 0.12 to 0.25, wherein the filaments after discharge from the cooling chamber (7) are introduced into a stretching unit (12) and the filaments are then deposited on a storage device for the spunbonded nonwoven web.

10. The method according to claim 9, wherein a polypropylene is used as thermoplastic material.

11. The method according to claim 10, wherein the polypropylene has a melt flow rate of 10 dg/min to 40 dg/min.

12. The method according to claim 10 or 11, wherein the polypropylene has an onset temperature $T_{c,rheol}$ of at least 120°C and preferably of at least 123°C.

13. The method according to any one of claims 10 to 12, wherein the polypropylene has an average isotactic sequence length of at least 65 and preferably of at least 85.

14. The method according to any one of claims 9 to 13, wherein monocomponent filaments are produced as filaments.

15. The method according to any one of claims 9 to 14, wherein the stretching of the filaments is carried out with the proviso that filaments having a filament diameter of 0.3 to 2 den, preferably of 0.3 to 0.9 den are obtained.


**Revendications**

1. Dispositif de fabrication d'une bande de filé-lié à partir de filaments, comportant une filière (1), une chambre de refroidissement (7) dans laquelle l'air de traitement peut être introduit pour refroidir les filaments, un dispositif d'aspiration monomère (3) disposé entre la filière (1) et la chambre de refroidissement (7), une unité d'étirage (12) et un dispositif de dépôt pour déposer les filaments en formant la bande de filé-lié, dans lequel la chambre de refroidissement (7) est divisée en deux sections de chambre de refroidissement (7a, 7b), de l'air de traitement provenant d'une première section supérieure de la chambre de refroidissement (7a) pouvant être aspiré avec un débit volumique VM vers le dispositif d'aspiration monomère (3), l'air de traitement sortant de la première section supérieure de la chambre de refroidissement (7a) avec un débit volumique V1 dans une seconde section inférieure de la chambre de refroidissement (7b) et le ratio de débit volumique VM/V1 s'élevant à 0,1 à 0,35, de préférence à 0,12 à 0,25.

2. Dispositif selon la revendication 1, dans lequel, près de la chambre de refroidissement (7), est disposée une cabine d'apport d'air (8) qui est divisée en au moins deux sections de cabine (8a, 8b), de l'air de traitement pouvant être introduit depuis une première section de cabine (8a) dans la première section supérieure de la chambre de refroidissement (7a) et de l'air de traitement pouvant être introduit depuis une seconde section de cabine (8b) dans la seconde section inférieure de chambre de refroidissement (7b).

3. Dispositif selon une des revendications 1 ou 2, dans lequel de l'air de traitement sort avec un débit volumique V2 de la seconde section inférieure de chambre de refroidissement (7b) et dans lequel le ratio de débit volumique V1/V2 s'élève à 0 à 0,5, de préférence à 0,05 à 0,5 et plus préférentiellement à 0,1 à 0,45.

4. Dispositif selon une des revendications 1 à 3, dans lequel de l'air de traitement provenant de la première section supérieure de la chambre de refroidissement (7b) sort à une vitesse V1 dans la seconde section inférieure de chambre de refroidissement (7b), dans lequel de l'air de traitement sort de la seconde section inférieure de chambre de refroidissement (7b) à une vitesse V2 et dans lequel le ratio de vitesse V1/V2 s'élève à 0,2 à 0,5, de préférence à 0,25 à 0,5 et plus préférentiellement à 0,3 à 0,5.

**5.** Dispositif selon une des revendications 1 à 4, dans lequel la répartition des 5 trous de buses de la filière (1) est homogène partout ou sur toute la plaque à buses de la filière (1).

**6.** Dispositif selon une des revendications 1 à 5, dans lequel la distance entre la filière (1) et la chambre de refroidissement (7) est réglable.

**7.** Dispositif selon une des revendications 1 à 6, dans lequel, au niveau de la chambre de refroidissement (7) et dans la zone de transition entre la chambre de refroidissement (7) et l'unité d'étirage (12), il n'est pas prévu d'apport d'air depuis l'extérieur hormis l'apport d'air de traitement dans la chambre de refroidissement (7).

**8.** Dispositif selon une des revendications 1 à 7, dans lequel, entre l'unité d'étirage (12) et le dispositif de dépôt, au moins un diffuseur (14, 15) est disposé.

**9.** Procédé de fabrication d'une bande de filé-lié à partir de filaments en matière thermoplastique, dans lequel les filaments sont filés au moyen d'une filière (1) et introduits en passant devant un dispositif d'aspiration monomère (3) dans une chambre de refroidissement (7), les filaments étant refroidis dans la chambre de refroidissement (7) avec de l'air de traitement, dans lequel la chambre de refroidissement (7) est divisée en deux sections de chambre de refroidissement (7a, 7b), dans lequel de l'air de traitement est aspiré depuis une première section supérieure de la chambre de refroidissement (7a) avec un débit volumique VM vers le dispositif d'aspiration monomère (3), dans lequel de l'air de traitement est introduit depuis la première section supérieure de chambre de refroidissement (7b) avec un débit volumique V1 dans une seconde section inférieure de chambre de refroidissement (7b), dans lequel le ratio de débit volumique VM/V1 s'élève à 0,1 à 0,3, de préférence à 0,12 à 0,25, dans lequel les filaments, une fois sortis de la chambre de refroidissement (7) sont introduits dans une unité d'étirage (12) et dans lequel les filaments sont ensuite déposés sur un dispositif de dépôt pour former la bande de filé-lié.

**10.** Procédé selon la revendication 9, dans lequel on utilise comme matière thermoplastique un polypropylène.

**11.** Procédé selon la revendication 10, dans lequel le polypropylène a une vitesse d'écoulement de coulée de 10 dg/min à 40 dg/min.

**12.** Procédé selon la revendication 10 ou 11, dans lequel le polypropylène a une température de réglage Tc,rhéol d'au moins 120 °C et de préférence d'au moins 123 °C.

**13.** Procédé selon une des revendications 10 à 12, dans lequel le polypropylène présence une longueur de séquence isotactique moyenne d'au moins 65, de préférence d'au moins 85.

**14.** Procédé selon une des revendications 9 à 13, dans lequel, en tant que filaments, des filaments monocomposant sont fabriqués.

**15.** Procédé selon une des revendications 9 à 14, dans lequel l'étirage des filaments est réalisé sous réserve que des filaments d'un diamètre de filament de 0,3 à 2 den, de préférence de 0,3 à 0,9 den, soient obtenus.

**Fig.1**

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1340843 A1